# EUROPEAN PATENT APPLICATION

(11) **EP 4 296 071 A1**
(43) Date of publication of application: **27.12.2023**
(21) Application number: 22180339.8
(22) Date of filing: 22.06.2022
(51) Int. Cl.: B43K 19/06, B43K 19/18, C09D 13/00

(54) **WRITING INSTRUMENT**

(71) Applicant: BIC Violex Single Member S.A., 145 69 Anoixi (GR)
(72) Inventor: Kokozidis, Michail, 14569 Anoixi (GR)
(74) Representative: Peterreins Schley

(57) **Abstract**

In a first aspect, the present disclosure relates to a system comprising a first writing instrument configured to deposit a first van der Waals material on a writing substrate and a second writing instrument configured to deposit a second van der Waals material on the writing substrate. The first van der Waals material is different from the second van der Waals material.

## Description

### Technical Field

The present disclosure relates to the field of writing instruments. More specifically, the present disclosure relates to writing instruments comprising van der Waals materials.

### Background

An electronic kit is a package of electrical components, which may be used to build an electronic circuit or device. Electronic kits may be for example used for do-it-yourself projects. Further, electronic kits may be used to understand how electronic devices and circuits work in an interactive and fun way. In particular, electronic kits may be used by children to understand for educational purposes. However, available electronic kits may be limited to predefined structures, such as premanufactured traces which act as wiring.

Alternatively, graphite pencils may be used to draw on paper to provide traces. Drawing the traces by depositing lines of graphite on paper allows the user to creatively choose circuit designs and may provide a deeper understanding of electronics compared to premanufactured kits. Additionally, the user may draw traces, such that an image results, leading to both a functional and aesthetically pleasing circuit. However, currently self-drawn circuits may be limited to standard electronic circuits.

Therefore, there is a need in developing new efficient techniques capable of solving some or all of the above-mentioned problems.

### Summary

In a first aspect, the present disclosure relates to a system comprising a first writing instrument configured to deposit a first van der Waals material on a writing substrate and a second writing instrument configured to deposit a second van der Waals material on the writing substrate. The first van der Waals material is different from the second van der Waals material.

In some embodiments, the first van der Waals material may be an n-type semiconductor material and the second van der Waals material may be a p-type semiconductor material.

In some embodiments, the n-type semiconductor material may comprise TiS₂ or TiS₃.

In some embodiments, the p-type semiconductor material may comprise WS₂.

In some embodiments, a first line deposited by the first writing instrument, wherein the first line comprises the first van der Waals material, may be configured to be an n-type semiconductor.

In some embodiments, a second line deposited by the second writing instrument, wherein the second line comprises the second van der Waals material, may be configured to be a p-type semiconductor.

In some embodiments, the first and/or second line may exhibit a thickness between about 5 µm to about 50 µm, more specifically between about 15 µm to about 25 µm.

In some embodiments, the system may further comprise a third writing instrument, wherein the third writing instrument may comprise a third van der Waals material.

In some embodiments, the third van der Waals material may be an electroconductive material, in particular graphite.

In some embodiments, the first writing instrument may comprise a first pencil lead, wherein the first pencil lead may comprise the first van der Waals material; and/or the second writing instrument may comprise a second pencil lead, wherein the second pencil lead may comprise the second van der Waals material; and/or the third writing instrument may comprise a third pencil lead, wherein the third pencil lead may comprise the third van der Waals material.

In some embodiments, the first writing instrument may comprise the first van der Waals material in the form of a first powder; and/or the second writing instrument may comprise the second van der Waals material in the form of a second powder; and/or the third writing instrument may comprise the third van der Waals material in the form of a third powder.

In some embodiments, the first writing instrument may be further configured to deposit a first colorant; and/or the second writing instrument may be configured to deposit a second colorant, wherein the first colorant may exhibit a different color than the second colorant.

In some embodiments, the first writing instrument may be configured to deposit the first van der Waals material and the first colorant as a mixture; and/or the second writing instrument may be configured to deposit the second van der Waals material and the second colorant as a mixture.

In some embodiments, the first writing instrument may comprise the first van der Waals material in the form of one or more crystals, in particular one or more van der Waals crystals; and/or the second writing instrument may comprise second van der Waals material in the form of one or more crystals, in particular one or more van der Waals crystals.

In some embodiments, the system may comprise at least one electronic component, more specifically at least one light-emitting component, at least one electromechanical component and/or at least one electromagnet.

In some embodiments, the at least one electronic component may comprise at least two electrical contacts.

In some embodiments, the system may comprise a non-conductive writing substrate, more specifically a paper, and in particular cellulose paper.

In some embodiments, the system further may comprise a power source, more specifically a portable power source and in particular a rechargeable battery.

In some embodiments, the power source may comprise a positive terminal and negative terminal, more specifically wherein the power source may be configured to allow exchanging the spatial position of the positive terminal and the negative terminal, in particular wherein power source may be configured to allow the spatial position of the positive terminal and the negative terminal by rotating the power source or a part thereof.

In a second aspect, the present disclosure relates to a use of the system according to the first aspect, wherein the first and second writing instrument may be used to draw an electrical circuit on a substrate, in particular the writing substrate.

In a third aspect, the present disclosure relates to a writing instrument configured to deposit an n-type or p-type semiconductor material.

### Brief Description of the Drawings

Other characteristics will be apparent from the accompanying drawings, which form a part of this disclosure. The drawings are intended to further explain the present disclosure and to enable a person skilled in the art to practice it. However, the drawings are intended as non-limiting examples. Common reference numerals on different Figures indicate like or similar features.
**Figure 1** shows an electronic circuit comprising a p-n diode formed by adjacently drawn areas comprising a p-type semiconductor and an n-type semiconductor material, wherein a power source is connected such that a current can flow.
**Figure 2** shows an electronic circuit comprising a p-n diode formed by adjacently drawn areas comprising a p-type semiconductor and an n-type semiconductor material, wherein a power source is connected such that a current cannot flow.
**Figure 3** shows an electronic circuit comprising a p-n diode formed by areas comprising a p-type semiconductor and an n-type semiconductor material drawn atop one another, wherein a power source is connected such that a current can flow.
**Figure 4** shows an electronic circuit comprising a p-n diode formed by areas comprising a p-type semiconductor and an n-type semiconductor material drawn atop one another, wherein a power source is connected such that a current cannot flow.

### Detailed Description

Hereinafter, a detailed description will be given of the present disclosure. The terms or words used in the description and the aspects of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

In a first aspect, the present disclosure relates to a system 100 comprising a first writing instrument 110 configured to deposit a first van der Waals material on a writing substrate and a second writing instrument 120 configured to deposit a second van der Waals material on the writing substrate. The first van der Waals material is different from the second van der Waals material.

The term "van der Waals material" may i.a. (inter alia) refer to its common meaning in the art. Additionally or alternatively, the term "van der Waals material" may refer to two-dimensional layers, wherein the two dimensional layers are bonded to adjacent layers by van der Waals forces. Additionally or alternatively, the term "van der Waals material" may refer to a plurality of individual atomic planes bonded by van der Waals forces.

The first and second van der Waals materials may for example differ in their electronic properties. For example, first van der Waals material may exhibit an increased electroconductivity compared to the second van der Waals material. Hence, using the first 110 and second 120 writing instrument, electronic circuits with variable properties along the circuit can be drawn.

When the first and second writing instrument 120 are used for drawing, the first and/or second van der Waals material may be deposited on the substrate, e.g. paper. The deposited van der Waals material may exhibit electroconductive properties, hence the van der Waals materials may form an electrical or electronic circuit. The user may hence use the first and second writing instrument 120 to draw lines forming an electrical or electronic circuit. The user may attach auxiliary components to the lines, such as a power source 300 and a light-emitting diode, to test whether the drawn lines form a working electronic circuit. Hence, by attaching auxiliary components to the lines the user may test the functionality of the electronic circuit. By drawing different circuits and using different auxiliary components the user may learn about electronic circuits. The user may draw the circuits with self-chosen designs and in an aesthetic way. Hence, the system may allow the user to train his creativity. Further, the system may only require a limited amount to form sophisticated electronic circuits. E.g. the user may only require a power source and an auxiliary component for testing, as opposed to a PCB-board, wiring and precision soldering equipment.

The term "electroconductive" may i.a. refer to its common meaning in the art. Alternatively or additionally, the term "electroconductive" may refer to a property of a material or structure, wherein the material or structure is capable of conducting electricity. Alternatively or additionally, the term "electroconductive" may refer to a property of a material or structure, wherein the resistivity of the material or structure is less than about 2.1 × 10⁻¹ Ωm, more specifically less than about 1 × 10⁻² Ωm and in particular less than about 3.3 × 10⁻³ Ωm, at 20°C. Alternatively or additionally, the term "electroconductive" may refer to a property of a material or structure, wherein the resistivity of the material or structure is between about 1×10⁻⁸ Ωm and about 2.1×10⁻¹ Ωm, more specifically between about 1×10⁻⁸ Ωm and about 1×10⁻² Ωm and in particular between about 1×10⁻⁸ Ωm and about 3.3×10⁻³ Ωm, at 20°C.

The first and second van der Waals materials may be present in the form of van der Waals crystals. Hence, in some embodiments, the first writing instrument 110 may comprise the first van der Waals material in the form of one or more crystals, in particular one or more van der Waals crystals; and/or the second writing instrument 120 may comprise second van der Waals material in the form of one or more crystals, in particular one or more van der Waals crystals.

The crystal may be composed of the two-dimensional layer or individual atomic planes mentioned above. When a van der Waals crystal is rubbed against a substrate, the two-dimensional layers or individual atomic planes of the crystal may separate, leading to the two-dimensional layers or individual atomic planes being deposited onto the substrate. The two-dimensional layers or individual atomic planes may, in some cases, not be deposited as monolayers, but as a plurality of layers or plurality of individual atomic planes bonded to one another.

In some embodiments, the first writing instrument 110 may comprise the first van der Waals material in the form of a first powder. Additionally or alternatively, the second writing instrument 120 may comprise the second van der Waals material in the form of a second powder. The writing instrument may for example, apply the powder in a pure form. In another embodiment, the writing instrument may comprise the powder in a mixture with a binder, in particular a non-conductive binder. The binder may improve the attachment of the van der Waals materials to the substrate and may improve the deposition of the van der Waals material on the substrate.

The term "powder" within this disclosure i.a. refers to its common meaning in the art. Additionally or alternatively, the term "powder" may refer to a plurality of particles, in particular particles with a diameter in the nanometer or micrometer range. The particles may be singular van der Waals crystals or aggregates of van der Waals crystals.

In some embodiments, the first writing instrument 110 may comprise a first pencil lead, wherein the first pencil lead may comprise the first van der Waals material. Additionally or alternatively, the second writing instrument 120 may comprise a second pencil lead, wherein the second pencil lead may comprise the second van der Waals material. The pencil lead may be for example at least partly be formed of the powder and the binder.

In another embodiment, the first and second van der Waals materials may be comprised within the writing instrument as a dispersion. In particular, the dispersion may comprise a volatile fluid. After depositing the dispersion on a substrate the volatile fluid may evaporate, whereas the first and/or second van der Waals material may remain, forming a coherent line and/or structure. The dispersion may additionally comprise a binder. The binder may improve the attachment of the van der Waals materials to the substrate.

In some embodiments, the first van der Waals material may be an n-type semiconductor material and the second van der Waals material may be a p-type semiconductor material.

The term "n-type semiconductor" within this disclosure may i.a. refer to its common meaning in the art. Additionally or alternatively, the term "n-type semiconductor" may refer to a material exhibiting n-type semiconductive properties. Additionally or alternatively, the term "n-type semiconductor" within this disclosure may refer to a material exhibiting semiconductive material wherein electrons are the majority carriers and holes are the minority carriers.

The term "p-type semiconductor" within this disclosure may i.a. refer to its common meaning in the art. Additionally or alternatively, the term "p-type semiconductor" may refer to a material exhibiting p-type semiconductive properties. Additionally or alternatively, the term p-type semiconductor within this disclosure may refer to a material exhibiting semiconductive material wherein holes are the majority carriers and electrons are the minority carriers.

The term "semiconductor" within this disclosure may i.a. refer to its common meaning in the art. Additionally or alternatively, the term "semiconductor" may refer to a material having an electrical conductivity between that of a conductor and an insulator. Additionally or alternatively, the term "semiconductor" may refer to a material exhibiting an increase in electrical conductivity with increasing temperature.

As mentioned above, a user may use the first and second writing instrument 120 to draw on a substrate and deposit the first and second van der Waals material to form an electronic circuit. A writing instrument comprising an n-type semiconductor material and a writing instrument comprising a p-type semiconductor material may allow the user to draw a semiconductor circuit. In particular, when used in conjunction, the writing instrument comprising the p-type semiconductor material and the n-type semiconductor material may be used to draw p-n diode, by drawing a p-type semiconducting layer placed adjacent to an n-type semiconducting layer.

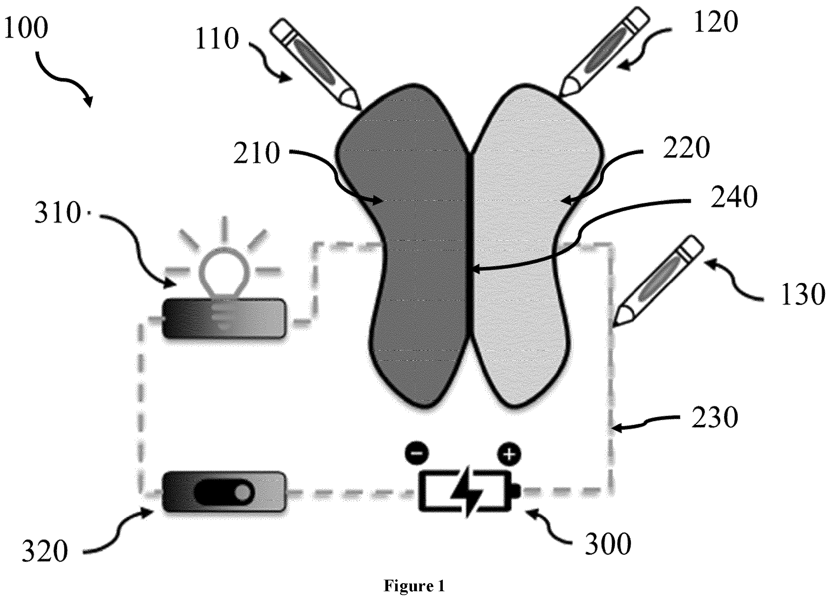

As depicted in Figure 1, the user may color a first area 210 with the first writing instrument 110 and a second area 220 with the second writing instrument 120, wherein the first and second area border one another. The first area 210 may be formed by a plurality of first lines and the second area 220 may be formed by a plurality of second lines. The border of the first 210 and second area 220 may form a p-n junction 240 and as a result a p-n diode.

The term "diode" within this disclosure i.a. refers to its common meaning in the art. Alternatively or additionally, the term "diode" may refer to a structure, wherein the structure is configured to conduct current primarily in one direction. Alternatively or additionally, the term "diode" may refer to a structure, wherein the structure a has a low resistance in one direction and a high resistance in the other direction. In particular, the structure may exhibit a resistance greater than 2.1×10⁻¹ Ωm in one direction and less than 2.1×10⁻¹ Ωm in the other direction. The term "direction" in relation to the conduction of current shall not refer to a spatial direction. The term "direction" in relation to the conduction of current shall refer to the direction of charge transport. The term "p-n diode" within this disclosure i.a. refers to its common meaning in the art. Additionally or alternatively, the term "p-n diode" may refer to a diode comprising a p-n junction. The term "p-n junction" within this disclosure i.a. refers to its common meaning in the art. Additionally or alternatively, the term "p-n junction" may refer to an interface of a p-type semiconductor material and an n-type semiconductor material.

For example, a first line deposited by the first writing instrument 110, wherein the first line comprises the first van der Waals material, may be configured to be an n-type semiconductor. Similarly, a second line deposited by the second writing instrument 120, wherein the second line comprises the second van der Waals material, may be configured to be a p-type semiconductor. A plurality of deposited lines may form an area. The lines may act as traces.

In some embodiments, the first writing instrument 110 may comprise the n-type semiconductor material in the form of one or more crystals, in particular one or more van der Waals crystals; and/or the second writing instrument 120 may comprise p-type semiconductor material in the form of one or more crystals, in particular one or more van der Waals crystals.

In some embodiments, the n-type semiconductor material may comprise TiS₂ or TiS₃. In some embodiments, the p-type semiconductor material may comprise WS₂. TiS₂, TiS₃ may be an n-type semiconductor material and a van der Waals material. Similarly, WS₂ may be a p-type semiconductor material and a van der Waals material.

In some embodiments, the first and/or second line may exhibit a thickness between about 5 µm to about 50 µm, more specifically between about 15 µm to about 25 µm. The thickness of the line is the dimension of the line perpendicular to the surface of the substrate it is deposited on.

In some embodiments, the system 100 may further comprise third writing instrument 130, wherein the third writing instrument 130 comprises a third van der Waals material, wherein the third van der Waals material is different from the first and second material. In some embodiments, the third writing instrument 130 may comprise an electroconductive material, more specifically an electroconductive van der Waals material and in particular graphite. For example, a third line 230 deposited by the third writing instrument 130, wherein the third line 230 comprises the third van der Waals material, may be configured to be electroconductive. In some embodiments, the third writing instrument 130 may comprise the conductive material in the form of a third powder. Additionally or alternatively, the third writing instrument 130 may comprise a third pencil lead, wherein the third pencil lead may comprise a third van der Waals material. The third van der Waals material may be an electroconductive material, in particular graphite. The third writing instrument 130 may be used together with the first and second writing instrument 120.

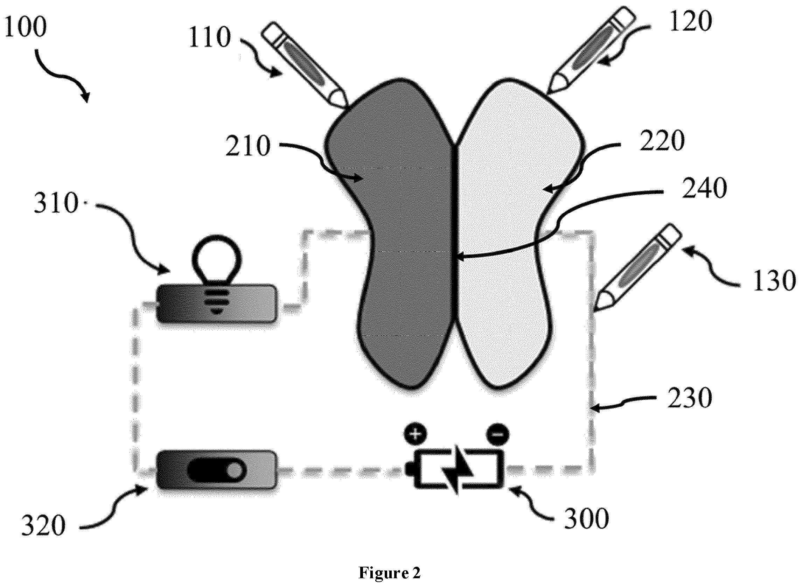

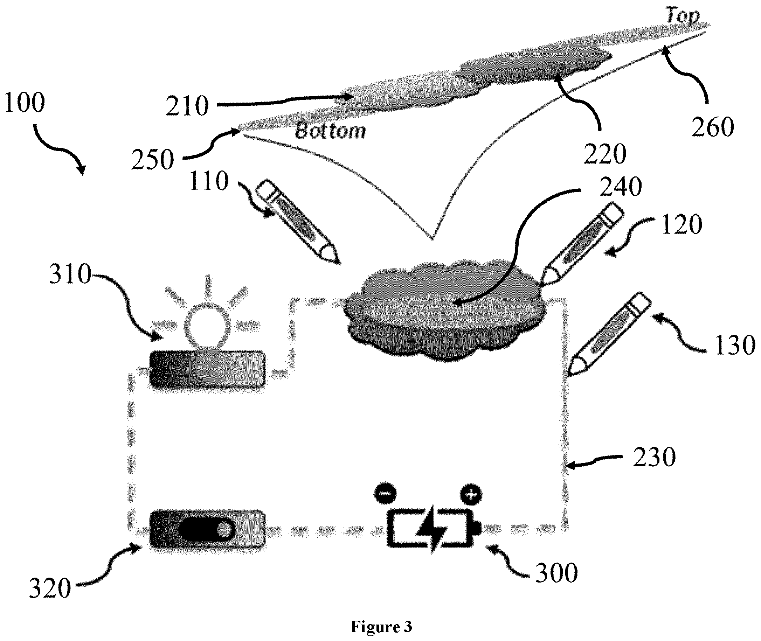

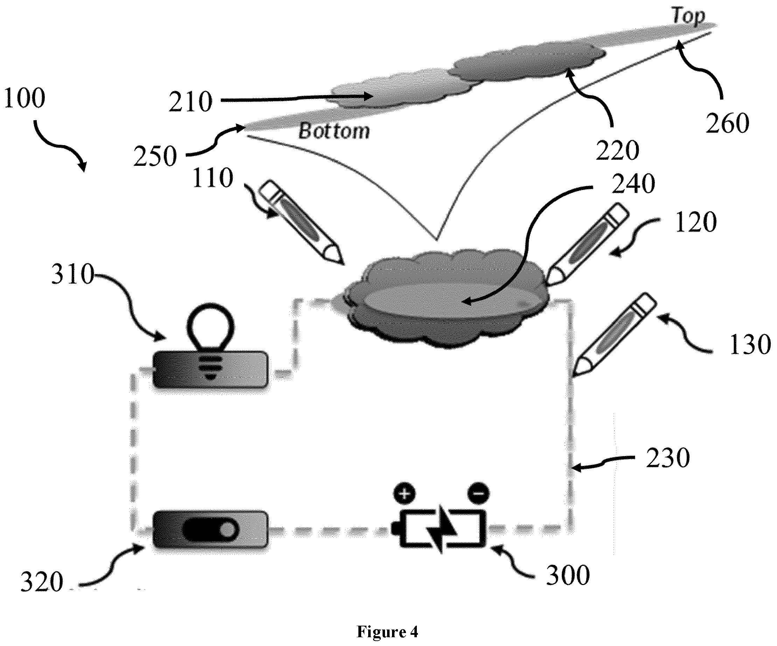

For example, as depicted in Figures 1 and 2, the third writing instrument 130 may be used to draw lines or traces to the first area 210 and the second area 220. Further, as depicted in the Figures 3 and 4, the third writing instrument 130 may be used to draw a third area 250 comprising the third van der Waals material on the substrate, then the first area 210 comprising the first van der Waals may be drawn on top of the third area 250, then the second area 220 comprising the second van der Waals material may be drawn on top of the first area 210 and a fourth area 260 comprising the third van der Waals material may be drawn on top of the second area 220. The third area 250 and fourth area 260 may be formed by a plurality of third lines 230. The four areas 210, 220, 250, 260 may then form a p-n diode. As depicted in Figures 3 and 4, the rest of the electronic circuit may be formed by the third line 230s 230 deposited by the third writing instrument 130.

In some embodiments, the system 100 may comprise at least one electronic component, more specifically at least one light-emitting component 310, at least one electromechanical component and/or at least one electromagnet. The electronic component may be used as visual indicator whether or not current flows through an electronic circuit drawn by the first and second writing instrument 120. For example, the at least one light-emitting component 310, such as a light-emitting diode, may light up when current flows through it, indicating that the drawn circuit is closed. The at least one electronic component may comprise at least two electrical contacts. The system 100 may further comprise a switch 320, which may allow opening and closing a drawn electronic circuit.

In some embodiments, the system 100 further may comprise a power source 300, more specifically a portable power source 300 and in particular a rechargeable battery. The power source 300 may supply current, in particular supply current to the electronic component.

In some embodiments, the power source 300 may comprise a positive terminal and negative terminal. The positive terminal and negative terminal may be connected to a line deposited by the first 110, second 120 or third writing instrument 130. In Figures 1 to 4, the power source 300 is connected to a third line 230 drawn using the third writing instrument 130. Further, as depicted in Figures 1 to 4 the power source 300 may be configured to allow exchanging the spatial position of the positive terminal and the negative terminal, in particular wherein power source 300 may be configured to allow the spatial position of the positive terminal and the negative terminal by rotating the power source 300 or a part thereof. For example, the positive and negative terminal may be connected to the first area 210 and the second area 220 respectively, via a third line 230. By switching the spatial position of the positive terminal and the negative terminal, the positive terminal may then be connected to the second area 220 and the negative terminal to the first area 210. The first area 210, when comprising an n-type semiconductor material, and the second area 220, when comprising a p-type semiconductor material, may form a p-n junction, which forms a p-n diode. The p-n diode only allows current to pass in one direction. In particular, electrons may only flow through p-n junction from the n-type semiconductor material to the p-type semiconductor material, e.g. from the first area 210 to the second area 220. As a result, the power source 300 may not be able to supply a current to the electronic device when the power source's 300 positive terminal is connected to the first line and the power source's 300 negative terminal is connected to the second line, as depicted in Figure 2 and 4. As a result, a light-emitting component 310 may not light up.

However, the power source 300 may be able to supply a current to the electronic device when the power source's 300 positive terminal is connected to the first line and the power source 300's negative terminal is connected to the second line, as depicted in Figures 1 and 3. As a result, a light-emitting component 310 placed next to the p-n junction may light up only when the first line is connected to the negative terminal and the second line is connected to the positive terminal.

In some embodiments, the first writing instrument 110 may be further configured to deposit a first colorant and/or the second writing instrument 120 may be configured to deposit a second colorant. In particular, the first colorant may exhibit a different color than the second colorant. In some embodiments, the first writing instrument 110 may be configured to deposit the first van der Waals material and the first colorant as a mixture. Additionally or alternatively, the second writing instrument 120 may be configured to deposit the second van der Waals materials and the second colorant as a mixture.

For example the first van der Waals material and the first colorant may be comprised as a mixture within a colored lead. In another embodiment, the first van der Waals material and the first colorant may be comprised as a mixture within a dispersion, in particular within a dispersion comprising a volatile fluid.

Depositing the first colorant together with the first van der Waals material and the second colorant with the second van der Waals material may allow the user to distinguish, where he has drawn with the first writing instrument 110 and where with the second writing instrument 120. This may facilitate drawing functional electronic circuits for the user. Further, the colorants may allow visualizing how the electronic circuit is built to a third person.

In some embodiments, the system 100 may comprise a non-conductive writing substrate, more specifically a paper, and in particular cellulose paper. When used with writing instruments comprising the first and/or second van der Waals materials in the form of a lead, the writing substrate may exhibit at least a minimal degree of surface roughness, such that a layer of the van der Waals material can be deposited upon the writing substrate.

In a second aspect, the present disclosure relates to a use of the system 100 according to the first aspect, wherein the first and second writing instrument 120 may be used to draw an electrical circuit on a substrate, in particular the writing substrate.

In a third aspect, the present disclosure relates to a writing instrument configured to deposit an n-type or p-type semiconductor material.

Although the present concept is defined in the attached claims, it should be understood that the present concept can also be defined in accordance with the following aspects:
1. A system comprising:
   - a first writing instrument configured to deposit a first van der Waals material on a writing substrate ; and
   - a second writing instrument configured to deposit a second van der Waals material on the writing substrate, wherein the first van der Waals material is different from the second van der Waals material.
2. The system according to aspect 1, wherein the first van der Waals material is an n-type semiconductor material and the second van der Waals material is a p-type semiconductor material
3. The system according to aspect 2, wherein the n-type semiconductor material comprises TiS₂ or TiS₃.
4. The system according to aspect 2 or 3, wherein the p-type semiconductor material comprises WS₂.
5. The system according to any preceding aspect, wherein a first line deposited by the first writing instrument, wherein the first line comprises the first van der Waals material, is configured to be an n-type semiconductor.
6. The system according to any preceding aspect, wherein a second line deposited by the second writing instrument, wherein the second line comprises the second van der Waals material, is configured to be a p-type semiconductor.
7. The system according to aspect 5 or 6, wherein the first and/or second line exhibit a thickness between about 5 µm to about 50 µm, more specifically between about 15 µm to about 25 µm.
8. The system according to any preceding aspect, wherein the system further comprises a third writing instrument, wherein the third writing instrument comprises a third van der Waals material, more specifically wherein the third van der Waals material is an electroconductive material and in particular wherein the third van der Waals material is graphite.
9. The system according to any preceding aspect, wherein the first writing instrument comprises a first pencil lead, wherein the first pencil lead comprises the first van der Waals material; and/or
   wherein the second writing instrument comprises a second pencil lead, wherein the second pencil lead comprises the second van der Waals material; and/or
   wherein the third writing instrument comprises a third pencil lead, wherein the third pencil lead comprises the third van der Waals material.
10. The system according to any preceding aspect, wherein the first writing instrument comprises the first van der Waals material in the form of a first powder; and/or
   wherein the second writing instrument comprises the second van der Waals material in the form of a second powder; and/or
   wherein the third writing instrument comprises the third van der Waals material in the form of a third powder.
11. The system according to any preceding aspect, wherein the first writing instrument is further configured to deposit a first colorant; and/or
   wherein the second writing instrument is configured to deposit a second colorant, wherein the first colorant exhibits a different color than the second colorant.
12. The system according to aspect 11, wherein the first writing instrument is configured to deposit the first van der Waals material and the first colorant as a mixture; and/or
   wherein the second writing instrument is configured to deposit the second van der Waals material and the second colorant as a mixture.
13. The system according to any preceding aspect, wherein the first writing instrument comprises the first van der Waals material in the form of one or more crystals, in particular one or more van der Waals crystals; and/or wherein the second writing instrument comprises second van der Waals material in the form of one or more crystals, in particular one or more van der Waals crystals.
14. The system according to any preceding aspect, wherein the system comprises at least one electronic component, more specifically at least one light-emitting component, at least one electromechanical component and/or at least one electromagnet.
15. The system according to any aspect 14, wherein the at least one electronic component comprises at least two electrical contacts.
16. The system according to any preceding aspect, wherein the system comprises a non-conductive writing substrate, more specifically a paper, and in particular cellulose paper.
17. The system according to any preceding aspect, wherein the system further comprises a power source, more specifically a portable power source and in particular a rechargeable battery.
18. The system according to aspect 17, wherein the power source comprises a positive terminal and negative terminal, more specifically wherein the power source is configured to allow exchanging the spatial position of the positive terminal and the negative terminal, in particular wherein power source is configured to allow the spatial position of the positive terminal and the negative terminal by rotating the power source or a part thereof.
19. Use of the system according to any preceding aspect, wherein the first and second writing instrument are used to draw an electrical circuit on a substrate, in particular the writing substrate.

## Claims

1. A system comprising:
- a first writing instrument configured to deposit a first van der Waals material on a writing substrate; and
- a second writing instrument configured to deposit a second van der Waals material on the writing substrate, wherein the first van der Waals material is different from the second van der Waals material.

2. The system according to claim 1, wherein the first van der Waals material is an n-type semiconductor material and the second van der Waals material is a p-type semiconductor material.

3. The system according to claim 2, wherein the n-type semiconductor material comprises TiS₂ or TiS₃.

4. The system according to claim 2 or 3, wherein the p-type semiconductor material comprises WS₂.

5. The system according to any preceding claim, wherein a first line deposited by the first writing instrument, wherein the first line comprises the first van der Waals material, is configured to be an n-type semiconductor.

6. The system according to any preceding claim, wherein a second line deposited by the second writing instrument, wherein the second line comprises the second van der Waals material, is configured to be a p-type semiconductor.

7. The system according to any preceding claim, wherein the system further comprises a third writing instrument, wherein the third writing instrument comprises a third van der Waals material, wherein the third van der Waals material is an electroconductive material and in particular wherein the third van der Waals material is graphite.

8. The system according to any preceding claim, wherein the first writing instrument comprises a first pencil lead, wherein the first pencil lead comprises the first van der Waals material; and/or
wherein the second writing instrument comprises a second pencil lead, wherein the second pencil lead comprises the second van der Waals material; and/or
wherein the third writing instrument comprises a third pencil lead, wherein the third pencil lead comprises the third van der Waals material.

9. The system according to any preceding claim, wherein the first writing instrument comprises the first van der Waals material in the form of a first powder; and/or
wherein the second writing instrument comprises the second van der Waals material in the form of a second powder; and/or
wherein the third writing instrument comprises the third van der Waals material in the form of a third powder.

10. The system according to any preceding claim, wherein the first writing instrument is further configured to deposit a first colorant; and/or
wherein the second writing instrument is configured to deposit a second colorant, wherein the first colorant exhibits a different color than the second colorant.

11. The system according to claim 10, wherein the first writing instrument is configured to deposit the first van der Waals material and the first colorant as a mixture; and/or
wherein the second writing instrument is configured to deposit the second van der Waals material and the second colorant as a mixture.

12. The system according to any preceding claim, wherein the system comprises at least one electronic component, the at least one electronic component being a light-emitting component, at least one electromechanical component and/or at least one electromagnet, wherein the at least one electronic component comprises at least two electrical contacts.

13. The system according to any preceding claim, wherein the system comprises a non-conductive writing substrate.

14. The system according to any preceding claim, wherein the system further comprises a power source, wherein the power source comprises a positive terminal and negative terminal, wherein the power source is configured to allow exchanging the spatial position of the positive terminal and the negative terminal.

15. Use of the system according to any preceding claim, wherein the first and second writing instrument are used to draw an electrical circuit on a writing substrate.
